# EUROPEAN PATENT SPECIFICATION

(11) **EP 2 373 087 B1**
(45) Date of publication and mention of the grant of the patent: **04.03.2015**
(21) Application number: 10195380.0
(22) Date of filing: 22.11.2006
(51) Int. Cl.: H04W 36/14, H04W 36/00

(54) **Intelligent cell selection in preparation for handover**
Intelligente Zellauswahl in der Vorbereitung für das Handover
Sélection de cellule intelligente en préparation d'un transfert

(43) Date of publication of application: 05.10.2011
(62) Divisional of application: 06301171.2
(73) Proprietor: Motorola Mobility LLC, Libertyville, IL 60048 (US)
(72) Inventor: Parron, Jérôme, 31100 TOULOUSE (FR)
(74) Representative: Delumeau, François Guy

(56) References cited:
- WO-A-02/093955
- WO-A-2005/055633
- WO-A-2006/107104
- DE-U1- 20 310 113
- US-A1- 2005 059 400
- "3rd Generation Partnership Project; Technical Specification Group GSM/EDGE Radio Access Network; Generic access to the A/Gb interface; Stage 2 (Release 6)", 3GPP STANDARD; 3GPP TS 43.318, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.7.0, 1 June 2006 (2006-06-01), pages 1-71, XP050378330,

## Description

### BACKGROUND

Multiple mode communications devices can connect to multiple radio access technology (RAT) networks. For example, a multiple mode device might have the ability to connect to both a wide area network, such as a Global System for Mobile Communications (GSM) network and a wireless local area network (WLAN), such as a WiFi Hot Spot.

To provide a good user experience, it is important that multiple mode devices be able to move seamlessly between different networks. Accordingly, service providers and equipment manufacturers provide mechanisms by which a device associated with one network can move to another network with minimal service disruption.

Typically, these mechanisms include some sort of scanning operation by which a device that is associated with a first network monitors certain characteristics of one or more other networks. If the device has to change networks, it will then have the information it needs to reconfigure itself for operation on one of the other networks. Examples of such multiple node devices are given by the prior art documents WO 2006/107104 A1 and WO 02/093955 A1. Document 3GPP TS 43.318 describes the overall architecture for Generic Access GA to the A/Gb interfaces being an extension of GSM/GPRS mobile services. A problem exists, however, in that monitoring other networks utilizes system resources, thereby degrading system performance and increasing power consumption. Accordingly, what is needed is intelligent scanning in preparation for handover.

This object is solved by the subject-matter of independent claims 1 and 5. Preferred embodiments are defined by the dependent claims.

### BRIEF DESCRIPTION OF THE DRAWINGS

For the purpose of facilitating an understanding of the subject matter sought to be protected, there are illustrative embodiments in the accompanying drawing, from an inspection of which, when considered in connection with the following description and claims, the subject matter sought to be protected, its construction and operation, and many of its advantages should be readily understood and appreciated
Fig. 1 depicts an exemplary system including a first RAT network, a second RAT network, and a mobile device positioned in an area of overlapping coverage.
Fig. 2 depicts a portion of the first RAT network, the second RAT network, and the mobile device of Fig. 1 in relationship to a core provider network and an IP network, wherein the mobile device can access the core provider network through a Generic Access Network (GAN) controller.
Fig. 3 is a functional block diagram depicting exemplary components of the mobile device of Fig. 1.
Fig. 4 depicts an exemplary embodiment of an access point database utilized in the mobile device of Fig. 2.
Fig. 5 is flowchart depicting an exemplary process by which the mobile device of Fig. 1 associates with an access point and builds and maintains an access point database.
Fig. 6 is a flowchart depicting an exemplary process by which the mobile device of Fig. 1 utilizes the access point database to rove from a first RAT network to a second RAT network.
Fig. 7 is a flowchart depicting an exemplary process by which the mobile device of Fig. 1 utilizes the access point database to handoff a call from a first RAT network to a second RAT network.

### DETAILED DESCRIPTION

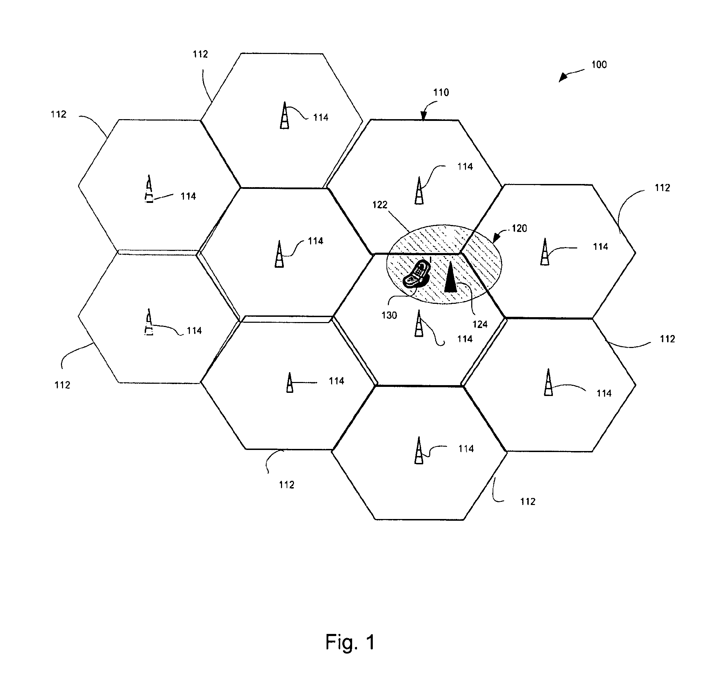

Referring to Fig. 1, in one example, a system comprises a first RAT network 110 and a second RAT network 120. Examples of RAT networks 110, 120 include but are not limited to, UTRA (UMTS Terrestrial Radio Access), CDMA2000®, Global System for Mobile Communications (GSM), GSM EDGE Radio Access (GERAN). WiMAX (802.16e), Bluetooth, WiFi (802.11), and the like. For ease of description, first RAT network 110 will sometimes be referred to hereafter as a GSM network and second RAT network will be referred to as a WLAN network, such as a WiFi network. It should be noted, however, that these descriptions for exemplary purposes only and the principles and operation described herein should not be construed as limited to these network types.

Referring further to Fig. 1, network 110 includes a plurality of cells 112, which are each serviced by a corresponding base station 114. Network 120 includes a coverage area 122 that is serviced by an access point 124. The composition and operation of networks 110, 120 is known so a detailed description of each will not be provided. Nevertheless, it is noted that each network will include additional provider equipment comprised of hardware and/or software components that are needed for the network to function. Detailed descriptions of these components have been omitted for the sake of brevity, but such components typically include components, such as base station controllers, switching systems, and other operation and support systems.

Referring still to Fig. 1, user equipment 130 is shown positioned in an area of overlapping coverage between first RAT network 110 and second RAT network 120. User equipment 130 in one example comprises a dual mode device capable of communicating with each network 110, 120. Examples of such devices include, but are not limited to, mobile phones, pagers, radios, personal digital assistants (PDAs), mobile data terminals, laptop computers, application specific gaming devices, video gaming devices incorporating wireless modems, and combinations or subcombinations of these devices. Such devices generally include components such as processors, controllers, memory components, user interface devices, data transmission logic, network interfaces, antennas, and the like. The design and operation of these devices is well known so a detailed description of each possibility will be omitted.

Further referring to Fig. 1, it should be understood that the components of networks 110, 120, and user equipment 130 are formed of one or more computer software and/or hardware components. A number of such components can be combined or divided. In one example, an exemplary component of each device employs and/or comprises a series of computer instructions written in or implemented with any of a number of programming languages, as will be appreciated by those skilled in the art.

The components of networks 110, 120, and UE can each employ at least one computer-readable signal-bearing medium. An example of a computer-readable signal-bearing medium is a recordable data storage medium such as a magnetic, optical, and/or atomic scale data storage medium. In another example, a computer-readable signal-bearing medium is a modulated carrier signal transmitted over a network. A computer-readable signal-bearing medium can store software and/or logic components that are employable to carry out the functionality described herein.

Referring further to Fig. 1, intelligent scanning, in accordance with the present application, can occur in many situations. For exemplary purposes, one such situation will now be described. When mobile device 130 moves from an area of sole coverage by first RAT network 110 to an area of shared coverage with second RAT network 120, mobile device 130 will associate with access point 124 of second RAT network 120.

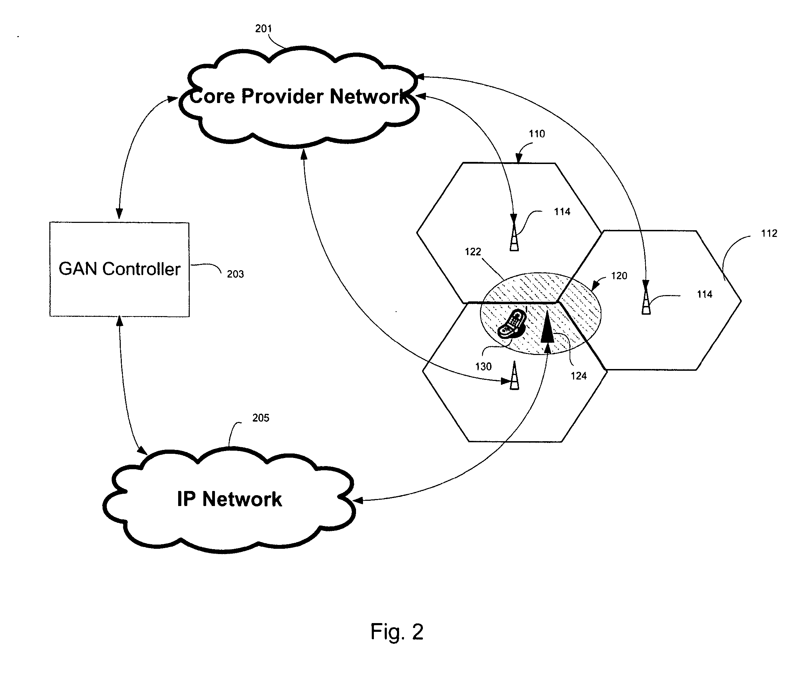

Referring to Fig. 2, mobile device 130 can then access core provider network 201 of first RAT network 110 through a Generic Access Network (GAN) controller 203. The access point 124 of second RAT network 120 is connected to GAN controller 203 through another network, such as IP network 205. Accordingly, mobile device 130 can utilize core network 201 through access point 124 and roam between first network 110 and second network 120 without service disruption.

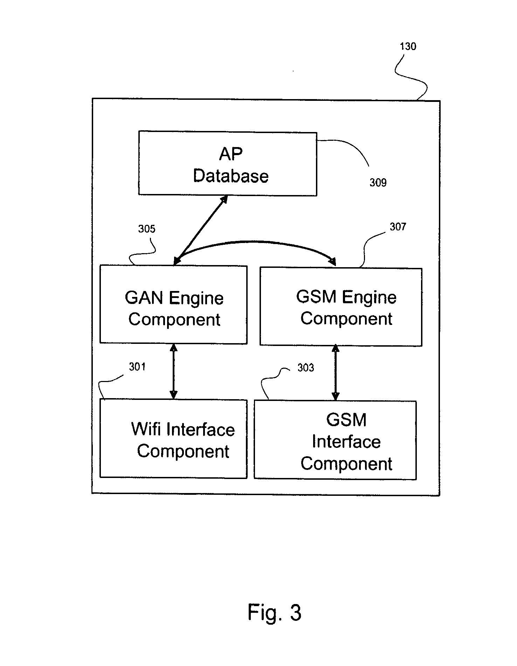

Referring to Fig. 3, mobile device 130 in one example comprises a WiFi interface component 301, a GSM interface component 303, a GAN engine component 305, a GSM engine component 307, and an AP database 309. It should be noted, however, that WiFi components and GSM components are described for illustrative purposes only. As mentioned above, what is described herein is compatible with other RAT networks. For instance, if network 110 were a UMTS network and network 120 were a Bluetooth network, then the GSM components (i.e. interface 303, engine 307) would be UMTS components and the WiFi components (e.g. interface 301) would be a Bluetooth component.

WiFi interface component 301 in one example comprises the hardware and/or software components (e.g. antenna, transceiver, chipsets) that allow mobile device 130 to access a WiFi network. Similarly, GSM interface component 303 provides the hardware and/software components that allow mobile device 130 to access a GSM network.

GAN engine component 305 is utilized by mobile device 130 to oversee and coordinate handover or rove out of mobile device 130 from second RAT network 120 to first RAT network 110, as will be further discussed herein.

GSM engine component 307 is utilized to scan for cells 112 of first RAT network 110 and to measure and/or detect certain characteristics of signals emanating from cells 112, as will be further discussed herein.

AP database 309 is utilized to store identities of access points to which mobile device 130 either is connected or has connected. AP database 309 also includes the identities of cells 112, for each access point, to which mobile device can rove or be handed over.

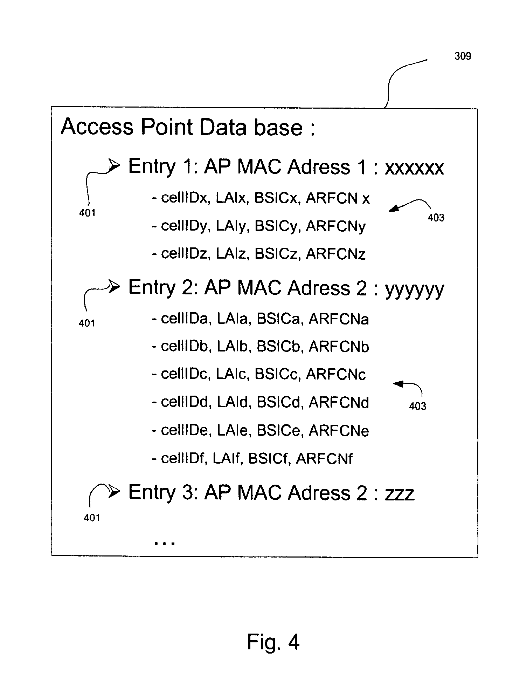

Referring to Fig. 4, an exemplary embodiment of AP database 309 is now described for illustrative purposes.

In one example, AP database 309 includes at least one entry 401. Each entry 401 corresponds to an AP to which mobile device 130 either is or has been connected. For example, if mobile device 130 associated with AP 124 on second RAT network 120, then the MAC address of AP 124 would be provided in the AP database. Similarly, if mobile device 130 associated with another AP on the second RAT network 120, then the MAC address of the second AP would also be included in AP database 309. It is also possible that mobile device could have associated with APs on networks other than second RAT network, in which case identities of these APs would also be included in the AP database 309. A further description of the building and maintenance of AP database 309 will be provided herein.

Referring still to Fig. 4, each entry 401 includes information 403 about cells 112 on first RAT network 110 to which mobile device 130 can rove out or be handed over. In one example, information includes at least one of a cell identifier (CellID), an Absolute Radio Frequency Channel Number (ARFCN), a Location Area Identify (LAI), and a Base Station Identity Code (BSIC) for each cell 112.

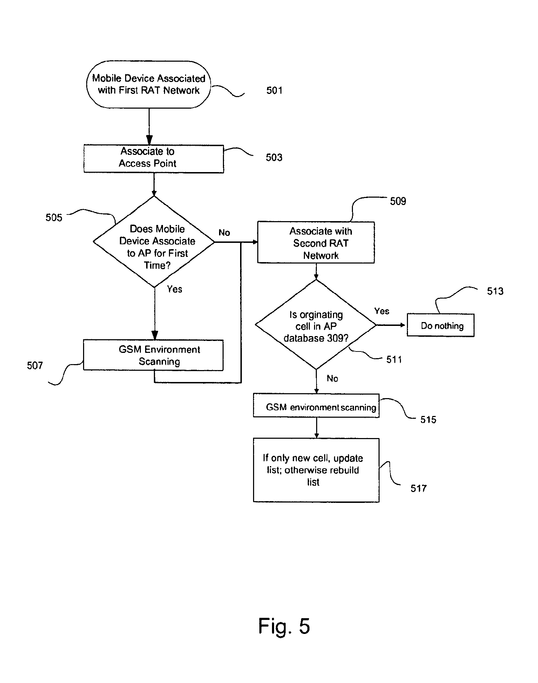

Referring to Figs. 1 and 5, an exemplary description of the operation of mobile device as it interacts with first RAT network 110 and second RAT network 120 will now be provided for illustrative purposes.

In step 501, mobile device 130 is associated with first RAT network 110. Accordingly, mobile device is transmitting and receiving data to/from a base station 114 serving the particular cell 112 to which mobile device 130 is connected.

When mobile device 130 comes within range of AP 124, WiFi interface component 301 will, in step 503, detect AP 124 and begin to associate with AP 124.

In step 505, GAN engine component 305 will determine whether or not AP 124 has met a first predetermined criterion that would trigger intelligent scanning. In one example, the first predetermined criterion is whether mobile device 130 has associated with AP 124 previously or whether mobile device 130 is associating with AP 124 for the first time. In one example, the GAN engine component makes the determination in step 505 by searching AP database 309 for an entry containing the MAC address of AP 124.

If the mobile device 130 is associating with AP 124 for the first time, then in step 507, GSM engine component 307 will scan the environment of mobile device 130 for cells 112 to which mobile device can be handed over or to which mobile device 130 can rove out. In one example, for each available cell 112, the GSM engine component 307 will detect at least one of LAI, CellID, ARFCN, and BSIC. It should be noted, however, that GSM engine component 307 could also scan for additional information for each available cell, such as data contained in system information 3 and system information 4, which could be broadcast by the network 120 (i.e. in the example of GSM RAT). After the environment scanning, flow proceeds to step 509 in which mobile device 130 roves in or is handed over to second RAT network 120. As another alternative example, it should be noted that the mobile device 130 could perform the scanning and the rove in procedures in parallel. It is not necessary for the scanning procedure to reach completion before the rove in procedure is begun.

In step 509, mobile device roves in (if a call is not taking place) or is handed over (if a call is taking place) to second RAT network 120. Once mobile device 130 is present on the second RAT network 120, mobile device 130 can utilize GAN controller 203 (Fig. 2) to continue utilizing the core provider network 201.

If, in step 505, mobile device 130 is not associating with AP 124 for the first time, then flow proceeds directly to step 509.

In step 511, GAN engine component 305 will determine whether or not AP 124 has met a second predetermined criterion that would trigger intelligent scanning. In step 511, GAN engine component 305 determines whether or not the cell 112 from which mobile device 130 originates (i.e. from which the mobile device roved in or was handed over from) is present in the entry corresponding to AP 124 in AP database 309. If the answer is yes, then no action is taken and the process terminates in step 513.

If the answer is no, then, in step 515, GSM engine component 307 will scan the environment, in a manner similar to step 507, of mobile device 130 for cells 112 to which mobile device can be handed over or to which mobile device 130 can rove out. The reason being that if the cell 112 from which mobile device 130 originates is not present in the cell list associated to the current AP, then it is likely that the AP 124 location has changed and then a scan is performed to rebuild the list.

In step 517, the GSM engine component 307 determines whether or not the originating cell 112 is the only cell that is the in the list of cells corresponding to AP 124. If the originating cell is the only new cell, then the list of cells corresponding to AP 124 is updated to include the originating cell 112. If one or more other cells are also new (i.e. not the in the list of cells corresponding to AP 124), then the list of cells corresponding to AP 124 is rebuilt to include all of the cells detected in step 515.

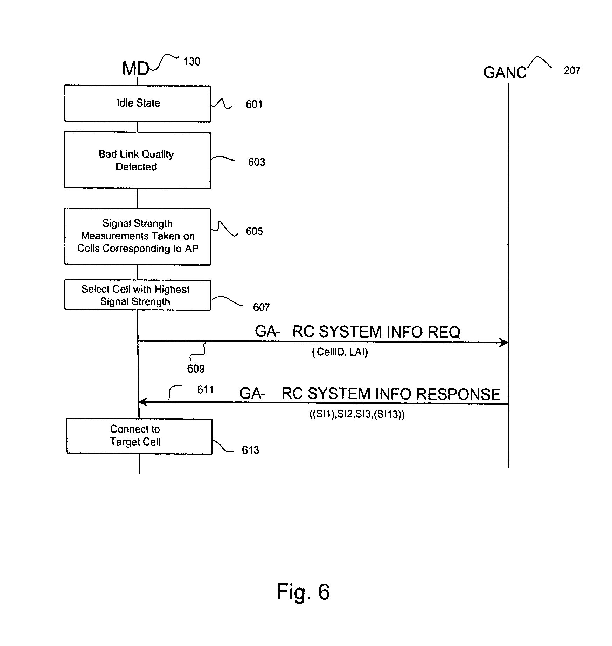

Referring to Fig. 6, an exemplary process by which mobile device 130 roves out to first network 110 after being associated with AP 124 is now described for illustrative purposes. In the exemplary process, first RAT network 110 is a GSM network and second RAT network 120 is a WiFi network, through which mobile device 130 is connected to GANC 203 (Fig. 2.)

In step 601, mobile device 130 is in idle state while associated to second RAT network 120. In step 603, mobile device 130 detects a bad link quality indication from AP 124, thereby indicating that mobile device 130 is in danger of leaving the coverage area of AP 124. In step 605, GAN engine component 305 searches AP database 309 to determine whether or not there are cells from GSM network 110 to which mobile device can rove. If there are cells, then GSM component 307, in step 605, will take signal strength measurements on the ARFCN of cells corresponding to AP 124 in AP database 309. In one example, the signal strength measurements are only performed on a subset (e.g. 5 or 6) of the available cells 112. In step 607, the GAN component selects a target cell, which in one example, is the cell 112 with the highest signal strength. In step 609, the GAN component sends a system request message through GAN controller 203 requesting that core network 201 provide mobile device 130 with system information (SI) for the target cell 112 (Fig. 2). In one example, the system information request message includes the CellID and LAI for the target cell. In step 611, the core network 201 sends, through GAN controller 207, a system info response message that includes at least one SI parameter for the target cell. The SI parameters are utilized by the mobile device 130 to camp onto the target cell and initiate communication with the network, as will be understood by those of skill in the art. In step 613, the mobile device 130 utilizes the system information to connect to the target cell. It should be noted that in one example the system info request and system info response message can be sent, as addition to, and in conformity with the 3GPP 44.318.

As another alternative, steps 609 and 611 could be omitted from the process set forth in Fig. 6. Instead, mobile device 130 could simply read one or more SI parameters directly from the target cell and immediately advance to step 613 in which the mobile device 130 would utilize the SI parameters to connect to the target cell.

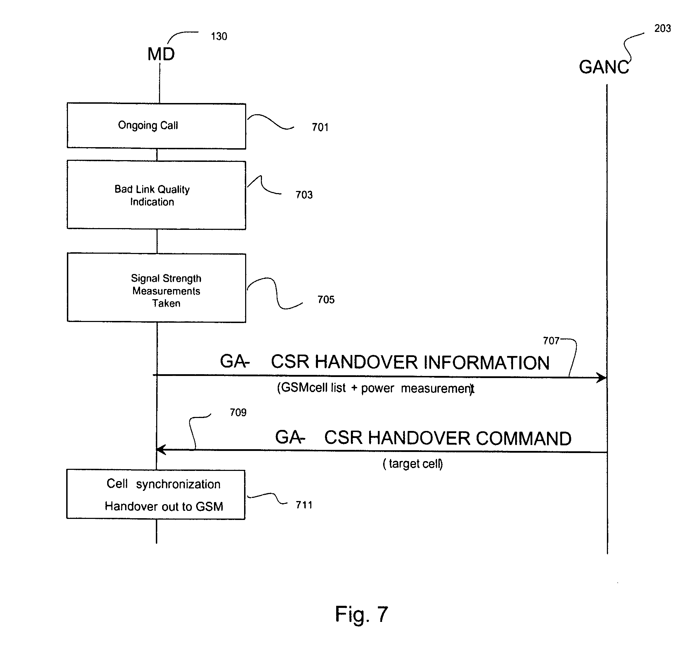

Referring to Fig. 7, an exemplary process by which mobile device 130 is handed over (i.e. during an ongoing call) to first network 110 after being associated with AP 124 is now described for illustrative purposes. In the exemplary process, first RAT network 110 is a GSM network and second RAT network 120 is a WiFi network, through which mobile device 130 is connected to GANC 203 (Fig. 2.)

In step 701, mobile device 130 is engaged in an active call GSM call through utilization of GANC 203 while being associated to second RAT network 120. In step 703, mobile device 130 detects a bad link quality indication from AP 124, thereby indicating that mobile device 130 is in danger of leaving the coverage area of AP 124. In step 705, GAN engine component 305 searches AP database 309 to determine whether or not there are cells from GSM network 110 to which mobile device can rove. If there are cells, then GSM component 307, in step 705, will take signal strength measurements on the ARFCN of cells corresponding to AP 124 in AP database 309. In one example, the signal strength measurements are only performed on a subset (e.g. 5 or 6) of the available cells 112. In step 707, the GAN component sends the list of cells 112, for which signal strength measurements where take, and the corresponding signal strengths to core network 201 through GAN controller 203. In step 709, the core network 201 will send a handover command to mobile device 130. In one example, the handover command will include the identity of a target cell. In step 711, GSM engine component 307 of mobile device 130 will synchronize with the target cell.

An exemplary description of how the system info request and system info response can be incorporated into 3GPP 44.318 will now be provided for illustrative purposes.

### 6.8 Network Assisted Rove Out.

GA-RC SYSTEM INFO REQUEST : new message type defined 24

GA-RC SYSTEM INFO RESPONSE : new message type defined 25

### 10.1.15 GA-RC SYSTEM INFO REQ

The MS uses this message to get system information from GSM/UTRA cell through GANC.

Direction: MS to GAN-C

| **IE I** | **Information Element** | **Type/Reference** | **Presence** | **Format** | **Length** | **Value** | **Notes** |
|---|---|---|---|---|---|---|---|
| | Length Indicator | Length Indicator 11.1.1.1 | M | V | 2 | | |
| | GAN Protocol Discriminator | Protocol Discriminator 11.1.1.2 | M | V | ½ | 0001 | |
| | Skip Indicator | Skip Indicator 11.1.1.3 | M | V | ½ | 0000 | |
| | GA-RC SYSTEM INFO REQ message identity | Message Type 11.1.1.4 | M | V | 1 | | |
| 4 | GERAN Cell Identity | Cell Identity 11.2.4 | M | TLV | 4 | | |
| 5 | GERAN Cell Identity | Location Area Identification 11.2.5 | M | TLV | 7 | | |

### 10.1.16 GA-RC SYSTEM INFO RESPONSE

GANC uses this message to send back system information from GSM/UTRA cell to MS.

Direction: GAN-C to MS

| **IE I** | **Information Element** | **Type/Reference** | **Presence** | **Format** | **Length** | **Value** | **Notes** |
|---|---|---|---|---|---|---|---|
| | Length Indicator | Length Indicator 11.1.1.1 | M | V | 2 | | |
| | GAN Protocol Discriminator | Protocol Discriminator 11.1.1.2 | M | V | ½ | 0001 | |
| | Skip Indicator | Skip Indicator 11.1.1.3 | M | V | ½ | 0000 | |
| | GA-RC SYSTEM INFO RESPONSE message identity | Message Type 11.1.1.4 | M | V | 1 | | |
| 4 | GERAN Cell Identity | Cell Identity 11.2.4 | M | TLV | 4 | | |
| 5 | Location Area | Location Area Identification 11.2.5 | M | TLV | 7 | | |
| 74 | GERAN Cell Data | Cell Data Container | M | TLV | n | | |

### New IE description

### Cell Data Container : new IE type 74

The purpose of the *Cell Data Container* information element is to provide all SI or PSI of a cell necessary for the MS to camp on.

| | | | | | | | | |
|---|---|---|---|---|---|---|---|---|
| 8 | 7 | 6 | 5 | 4 | 3 | 2 | 1 | |
| | GERAN Cell Data Container | | | | | | | octet 1 |
| ext | Length of GERAN Cell Data IE contents | | | | | | | octet 2, 2a |
| Length of GERAN Cell Data IE contents | | | | | | | | octet 2 |
| Container Data represents the concatenation of all necessary SI or PSI : Container repetition struct | | | | | | | | octet 4 .... octet n |

The Container Data contains the System information or Packet System Information concatenated.

A way to concatenate SI or PSI may be the following:
Each container data contain one entire SI or PSI.

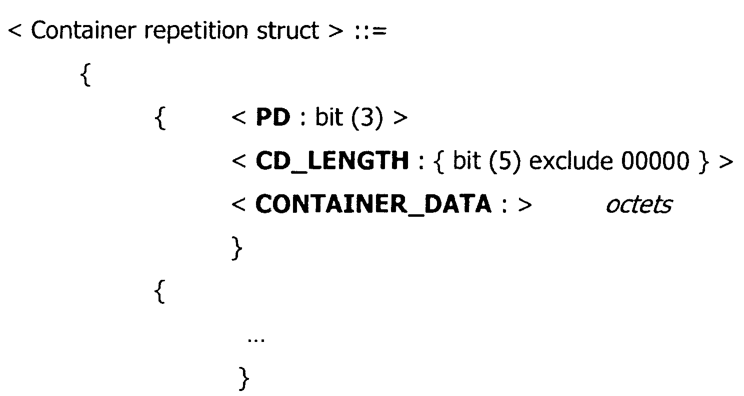

### -- Repetition of the container repetition struct continues until:

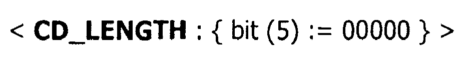

### PD (3 bit field)

This field contains a protocol discriminator and indicates the origin of the contained message.

| | |
|---|---|
| Bit | |
| 2 1 | |
| 0 0 0 | BCCH (LAPDm); |
| 0 0 1 | PBCCH (RLC/MAC); |
| 0 1 0 | Reserved; If received the contents of the container shall be discarded. |
| ...... | |
| 1 1 1 | Reserved; If received the contents of the container shall be discarded.. |

### CD_LENGTH (5 bit field)

This field indicates the number of CONTAINER DATA octets that forms a specific SI/PSI message and is coded as shown below.

| | |
|---|---|
| bit | |
| 5 4 3 2 1 1 | |
| 0 0 0 0 0 | No CONTAINER DATA follows; Spare padding is used to fill the rest of the message; |
| 0 0 0 0 1 | CONTAINER DATA length = 1 octet; |
| .... | |
| 1 0 1 1 1 1 | CONTAINER DATA length = 23 octets; |

All other values reserved. If a reserved value is received the contents of the container shall be discarded.

**CONTAINER_DATA**(n*8 bits) If the contained system information messages are copied from the BCCH, the information contained in the Cell Data Container shall be encoded as specified in 44.018 but shall exclude the following information elements from the beginning of the messages: L2 Pseudo Length, RR management Protocol Discriminator and Skip Indicator.

If the contained system information messages are copied from the PBCCH, the information contained in the Cell Data Container shall include the complete PSI message as specified in 44.060.

### UMA Specs additional information

### 11.2.4 GERAN Cell Identity

The purpose of the *Cell Identity* information element is to identify a cell within a location area.

| | | | | | | | | |
|---|---|---|---|---|---|---|---|---|
| 8 | 7 | 6 | 5 | 4 | 3 | 2 | 1 | |
| | GERAN Cell Identity IEI | | | | | | | octet 1 |
| Length of GERAN Cell Identity IE contents | | | | | | | | octet 2 |
| The rest of the IE is coded as in [8] not including IEI and length, if present. | | | | | | | | octet 3 |
| | | | | | | | | .... |
| | | | | | | | | octet n |

### Figure 11.2.4.1 GERAN Cell Identity information element

### 11.2.5 Location Area Identification

The purpose of the *Location Area Identification* information element is to provide an unambiguous Identification of location areas within the area covered by the GSM system.

| | | | | | | | | |
|---|---|---|---|---|---|---|---|---|
| 8 | 7 | 6 | 5 | 4 | 3 | 2 | 1 | |
| | Location Area Identification IEI | | | | | | | octet 1 |
| Length of Location Area Identification IE contents | | | | | | | | octet 2 |
| The rest of the IE is coded as in [24.008] not including IEI and length, if present. | | | | | | | | octet 3 |
| | | | | | | | | .... |
| | | | | | | | | octet n |

### Figure 11.2.5.1: Location Area Identification information element

While particular embodiments have been shown and described, it will be apparent to those skilled in the art that changes and modifications may be made in the particular embodiments of the invention disclosed which are within the scope of the invention as defined by the appended claims.

## Claims

1. A method, in a mobile device (130), comprising:
detecting poor link quality (603), while associated with a first radio access technology network (110) access point (124); **characterized in that** it further comprises:
searching an access point database (309), in the mobile device (130), to determine corresponding cells of a second radio access technology network that are available for handover, wherein said access point database contains entries associating access points of said first radio access technology network (110) with cells of said second radio access technology network;
if there are available cells from said second radio access technology network, wherein said available cells are cells associated with said access point (124) in said access point database (309) entries, selecting a target cell from said available cells;
sending a request message over said access point (124), and said first radio access technology network, to said second radio access technology network requesting system information for said target cell; and
receiving said system information for said target cell from said second radio access technology network over said access point (124) and using said system information to initiate communication with said target cell.

2. The method according to claim 1, wherein prior to the step of detecting poor link quality, the method further comprises:
engaging in a call by said mobile device (130) using a network protocol of said second radio access technology network, said network protocol being over said access point (124) of said first radio access technology network.

3. The method according to claim 2, wherein the step of sending a request message over said access point (124), and said first radio access technology network, to said second radio access technology network requesting system information for said target cell, further comprises:
sending said request message using said network protocol of said second radio access technology network over said access point (124).

4. The method according to claim 2, wherein engaging in a call by said mobile device (130) using a network protocol of said second radio access technology network, said network protocol being over said access point (124) of said first radio access technology network, further comprises:
sending data in said network protocol of said second radio access technology network using Internet Protocol (IP).

5. A method, in a mobile device (130), comprising:
detecting poor link quality (603), while associated with a first radio access technology network (110) access point (124); **characterized in that** it further comprises:
searching an access point database (309), in the mobile device (130), to determine corresponding cells of a second radio access technology network that are available for handover, wherein said access point database contains entries associating access points of said first radio access technology network (110) with cells of said second radio access technology network;
taking signal strength measurements of said corresponding cells;
sending signal strength measurement data for said corresponding cells as handover information over said access point (124), and said first radio access technology network, to said second radio access technology network; and
receiving a handover command identifying a target cell selected from said corresponding cells, from said second radio access technology network over said access point (124) and initiating a handover to said target cell.

## Patentansprüche

1. Verfahren in einer Mobilvorrichtung (130), umfassend:
Detektieren schlechter Verbindungsqualität (603) während der Verbindung mit einem Zugangspunkt (124) eines Netzes (110) einer ersten Funkzugangstechnologie, **dadurch gekennzeichnet, dass** es ferner umfasst:
Suchen einer Zugangspunktdatenbank (309) in der Mobilvorrichtung (130), um entsprechende Zellen eines Netzes einer zweiten Funkzugangstechnologie zu bestimmen, die für Handover verfügbar sind, wobei die Zugangspunktdatenbank Einträge enthält, die Zugangspunkte des Netzes (110) der ersten Funkzugangstechnologie mit Zellen des Netzes der zweiten Funkzugangstechnologie verbindet,
Auswählen, wenn verfügbare Zellen vom Netz der zweiten Funkzugangstechnologie vorhanden sind, wobei die verfügbaren Zellen mit dem Zugangspunkt (124) in den Einträgen der Zugangspunktdatenbank (309) verbunden sind, einer Zielzelle aus den verfügbaren Zellen,
Senden einer Anforderungsnachricht über den Zugangspunkt (124), und das Netz der ersten Funkzugangstechnologie, an das Netz der zweiten Funkzugangstechnologie mit einer Anforderung über Systeminformation für die Zielzelle, und
Empfangen der Systeminformation für die Zielzelle vom Netz der zweiten Funkzugangstechnologie über den Zugangspunkt (124) und Verwenden der Systeminformation zum Initiieren von Kommunikation mit der Zielzelle.

2. Verfahren nach Anspruch 1, wobei vor dem Schritt des Detektierens schlechter Verbindungsqualität das Verfahren ferner umfasst:
Einbinden in einen Anruf der Mobilvorrichtung (130) unter Verwenden eines Netzprotokolls des Netzes der zweiten Funkzugangstechnologie, wobei das Netzprotokoll über den Zugangspunkt (124) des Netzes der ersten Funkzugangstechnologie ist.

3. Verfahren nach Anspruch 2, wobei der Schritt des Sendens einer Anforderungsnachricht über den Zugangspunkt (124) und das Netz der ersten Funkzugangstechnologie an das Netz der zweiten Funkzugangstechnologie mit Anfordern von Systeminformation für die Zielzelle ferner umfasst:
Senden der Anforderungsnachricht unter Verwenden des Netzprotokolls des Netzes der zweiten Funkzugangstechnologie über den Zugangspunkt (124).

4. Verfahren nach Anspruch 2, wobei ein Einbinden in einen Anruf durch die Mobilvorrichtung (130) unter Verwenden eines Netzprotokolls des Netzes der zweiten Funkzugangstechnologie über den Zugangspunkt (124) ferner umfasst:
Senden von Daten im Netzprotokoll des Netzes der zweiten Funkzugangstechnologie unter Verwenden des Internetprotokolls (IP).

5. Verfahren in einer Mobilvorrichtung (130), umfassend:
Detektieren schlechter Verbindungsqualität (603) während der Verbindung mit einem Zugangspunkt (124) eines Netzes (110) einer ersten Funkzugangstechnologie, **dadurch gekennzeichnet, dass** es ferner umfasst:
Suchen einer Zugangspunktdatenbank (309) in der Mobilvorrichtung (130) zum Bestimmen entsprechender Zellen eines Netzes einer zweiten Funkzugangstechnologie, die für ein Funkzugangstechnologie mit Zellen des Netzes (110) der zweiten Funkzugangstechnologie verbinden,
Messen der Signalstärke für die entsprechenden Zellen,
Senden von Signalstärken-Messdaten für die entsprechenden Zellen als Handoverinformation über den Zugangspunkt (124) und das Netz der ersten Funkzugangstechnologie an das Netz der zweiten Funkzugangstechnologie, und
Empfangen eines Handoverbefehls, der eine aus den entsprechenden Zellen ausgewählte Zielzelle identifiziert, vom Netz der zweiten Funkzugangstechnologie über den Zugangspunkt (124) und Initiieren eines Handovers an die Zielzelle.

## Revendications

1. Procédé, dans un dispositif mobile (130), comportant :
la détection d'une qualité de liaison médiocre (603), tout en étant associé à un point d'accès (124) d'un premier réseau de technologie d'accès radio (110) ; **caractérisé en ce qu'**il comporte en outre :
la recherche au sein d'une base de données de points d'accès (309), dans le dispositif mobile (130), pour déterminer des cellules correspondantes d'un second réseau de technologie d'accès radio qui sont disponibles pour un transfert, dans laquelle ladite base de données de points d'accès contient des entrées associant les points d'accès dudit premier réseau de technologie d'accès radio (110) à des cellules dudit second réseau de technologie d'accès radio ;
s'il existe des cellules disponibles apartenant audit second réseau de technologie d'accès radio, où lesdites cellules disponibles sont des cellules associées auxdits points d'accès (124) dans lesdites entrées de la base de données (309) de points d'accès, la sélection d'une cellule cible parmi lesdites cellules disponibles ;
l'envoi d'un message de requête par l'intermédiaire dudit point d'accès (124), et dudit premier réseau de technologie d'accès radio, audit second réseau de technologie d'accès radio demandant une information de système pour ladite cellule cible ; et
la réception de ladite information de système pour ladite cellule cible à partir dudit second réseau de technologie d'accès radio par l'intermédiaire dudit point d'accès (124) et l'utilisation de ladite information de système pour commencer une communication avec ladite cellule cible.

2. Procédé selon la revendication 1, dans lequel, avant l'étape de détection d'une qualité de liaison médiocre, le procédé comporte en outre :
l'établissement d'un appel par ledit dispositif mobile (130) en utilisant un protocole de réseau dudit second réseau de technologie d'accès radio, ledit protocole de réseau transitant par ledit point d'accès (124) dudit premier réseau de technologie d'accès radio.

3. Procédé selon la revendication 2, dans lequel l'étape d'envoi d'un message de requête par l'intermédiaire dudit point d'accès (124), et dudit premier réseau de technologie d'accès radio, audit second réseau de technologie d'accès radio demandant une information de système pour ladite cellule cible, comporte en outre :
l'envoi dudit message de requête en utilisant ledit protocole de réseau dudit second réseau de technologie d'accès radio par l'intermédiaire dudit point d'accès (124).

4. Procédé selon la revendication 2, dans lequel l'établissement d'un appel par ledit dispositif mobile (130) en utilisant un protocole de réseau dudit second réseau de technologie d'accès radio, ledit protocole de réseau transitant par ledit point d'accès (124) dudit premier réseau de technologie d'accès radio, comporte en outre :
l'envoi de données dans ledit protocole de réseau dudit second réseau de technologie d'accès radio utilisant un protocole Internet (IP).

5. Procédé, dans un dispositif mobile (130), comportant:
la détection d'une qualité de liaison médiocre (603), tout en étant associé à un point d'accès (124) d'un premier réseau de technologie d'accès radio (110) ; **caractérisé en ce qu'**il comporte en outre :
la recherche au sein d'une base de données de points d'accès (309), dans le dispositif mobile (130), pour déterminer les cellules correspondantes d'un second réseau de technologie d'accès radio qui sont disponibles pour un transfert, dans laquelle ladite base de données de points d'accès contient des entrées associant les points d'accès dudit premier réseau de technologie d'accès radio (110) aux cellules dudit second réseau de technologie d'accès radio ;
la prise de mesures d'intensité de signal desdites cellules correspondantes ;
l'envoi des données de mesures d'intensité de signal pour lesdites cellules correspondantes en tant qu'information de transfert par l'intermédiaire dudit point d'accès (124), et dudit premier réseau de technologie d'accès radio, audit second réseau de technologie d'accès radio ; et
la réception d'une commande de transfert identifiant une cellule cible sélectionnée parmi lesdites cellules correspondantes, à partir dudit second réseau de technologie d'accès radio par l'intermédiaire dudit point d'accès (124) et le début d'un transfert à ladite cellule cible.
